# EUROPÄISCHE PATENTSCHRIFT

(11) **EP 2 010 426 B1**
(45) Veröffentlichungstag und Bekanntmachung des Hinweises auf die Patenterteilung: **03.10.2012**
(21) Anmeldenummer: 07727812.5
(22) Anmeldetag: 05.04.2007
(51) Int. Cl.: B62D 11/08, B60T 11/21, B62D 11/00

(54) **LENKSYSTEM FÜR KETTENFAHRZEUGE**
A STEERING SYSTEM FOR TRACKED VEHICLES
SYSTEME DE DIRECTION POUR VEHICULES A CHENILLES

(30) Priorität: 22.04.2006 DE 102006018817
(43) Veröffentlichungstag der Anmeldung: 07.01.2009
(73) Patentinhaber: ZF Friedrichshafen AG, 88038 Friedrichshafen (DE)
(72) Erfinder: SORG, Johannes, 88213 Ravensburg (DE); WALTER, Bruno, 88069 Tettnang (DE); AMANN, Notker, 88045 Friedrichshafen (DE); JANUSCHEVSKI, Robert, 88069 Tettnang (DE)
(86) Internationale Anmeldenummer: PCT/EP2007/053343
(87) Internationale Veröffentlichungsnummer: WO 2007/122088

(56) Entgegenhaltungen:
- EP-A2- 1 527 981
- WO-A-2006/018027
- US-A1- 2002 096 374

## Beschreibung

Die Erfindung betrifft ein Lenksystem für Kettenfahrzeuge gemäß dem Oberbegriff des Patentanspruchs 1.

Bei Kettenfahrzeugen werden zur Kurvenfahrt jeweils die kurveninnere Kette bzw. die kurveninneren Antriebsräder gegenüber der kurvenäußeren Kette bzw. den kurvenäußeren Antriebsrädern verlangsamt.

Aus dem Stand der Technik sind unterschiedliche Systeme bekannt, bei denen die Bremsleistung genutzt wird, indem sie der kurvenäußeren Kette bzw. den kurvenäußeren Antriebsrädern zugeführt wird.

Beispielsweise ist aus der DE 10 2005 027 117 A1 der Anmelderin ein elektrisches Antriebssystem für ein Fahrzeug mit Rutschlenkung bekannt, welches zwei gleichartige Antriebsmaschinen, eine elektrische Energiequelle, eine elektronische Steuerungseinrichtung sowie ein linkes und rechtes Summierungsgetriebe aufweist, welche als Planetengetriebe ausgebildet sind. Eine Antriebsmaschine treibt das Hohlrad des linken Summierungsgetriebes an, während die andere Antriebsmaschine das Hohlrad des rechten Summierungsgetriebes antreibt. Das Hohlrad des linken Summierungsgetriebes ist durch einen mechanischen Getriebezug trieblich direkt mit dem Sonnenrad des rechten Summierungsgetriebes verbunden, während das Hohlrad des rechten Summierungsgetriebes durch einen zweiten mechanischen Getriebezug trieblich direkt mit dem Sonnenrad des linken Summierungsgetriebes verbunden ist. Hierbei ist vorgesehen, dass eine linke Sonnenradwelle durch eine linke Hohlwelle in Richtung zur Fahrzeugmitte geführt ist, und dass eine rechte Sonnenradwelle durch eine rechte Hohlwelle in Richtung zur Fahrzeugmitte geführt ist. Dadurch wird eine sehr kompakte Bauweise erzielt.

Des weiteren ist aus der WO 2005/039958 A1 der Anmelderin ein elektrisches Antriebssystem für ein Fahrzeug mit Rutschlenkung mit einer linken und einer gleichartigen rechten elektrischen Antriebsmaschine bekannt, mit einer Kombination von Dieselmotor und Generator als elektrische Energiequelle, einer elektronischen Steuerungseinrichtung zur unabhängigen Ansteuerung von Drehzahlen an den beiden Antriebsmaschinen, mit einem linken und einem gleichartigen rechten Summierungsgetriebe, die als Planetengetriebe ausgebildet sind, wobei die Planetenträger den Abtrieb bilden und wobei das Hohlrad des linken Summierungsgetriebes trieblich direkt von der linken Antriebsmaschine und das Hohlrad des rechten Summierungsgetriebes trieblich direkt von der rechten Antriebsmaschine antreibbar ist, und wobei das Hohlrad des linken Summierungsgetriebes durch einen ersten mechanischen Getriebezug direkt mit dem Sonnenrad des rechten Summierungsgetriebes verbunden ist, und das Hohlrad des rechten Summierungsgetriebes durch einen zweiten mechanischen Getriebezug trieblich direkt mit dem Sonnenrad des linken Summierungsgetriebes verbunden ist.

Außer den genannten elektromechanischen Antriebssystemen sind auch rein elektrische und rein mechanische Antriebssysteme bekannt.

In der Regel wird die Lenkfunktion von Kettenfahrzeugen durch ein "Steer-by-Wire" System dargestellt. Hierbei ist die Sicherheit und Funktionsfähigkeit des Lenksystems von besonderer Bedeutung; insbesondere muss die gesamte Verbindung von Lenkrad zum Steuergerät und vom Steuergerät zum elektrischem Antrieb funktionsfähig sein.

Dies kann dadurch realisiert werden, dass sämtliche Komponenten des Lenksystems derart redundant ausgeführt sind, dass bei Ausfall einer einzelnen Komponente die Gesamtfunktion der Lenkung noch gewährleistet werden kann. Diese Vorgehensweise erweist sich jedoch als in nachteiliger Weise sehr aufwändig, da teilweise dreifache Redundanz benötigt wird, um erkennen zu können, welches System abweicht.

Aus der EP 1527981 A2 ist ein Notfall-Lenksystem für Kettenfahrzeuge mit hydraulischen Kreisläufen bekannt, wobei die hydraulischen Kreisläufe Notfallventile umfassen, die bei Ausfall eines primären Lenksystems Durchgriff auf die Bremsen des Fahrzeugs haben. Indem die linke und die rechte Bremse über die Notfallventile selektiv betätigbar sind, ist es möglich, das Kettenfahrzeug auch dann zu lenken, wenn das primäre Lenksystem nicht bestimmungsgemäß arbeitet.

Der vorliegenden Erfindung liegt die Aufgabe zugrunde, ein Lenksystem für Kettenfahrzeuge anzugeben, welches eine redundante Lenkmöglichkeit für Kettenfahrzeuge bietet, das nach dem Ausfall des primären Lenkmechanismus aktiviert wird. Das erfindungsgemäße Lenksystem soll zudem kostengünstig und einfach aufgebaut sein und in bereits bestehende Lenksysteme integrierbar sein.

Diese Rückfallebene wird nur bei Ausfall oder Störung des Hauptlenksystems aktiv und hat ansonsten keine Funktion im regulären Betrieb.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird ein Lenksystem für Kettenfahrzeuge, umfassend zwei Bremskreisläufe vorgeschlagen, welches ein durch die Lenkachse regelbares Lenkventil umfasst, welches bei Ausfall des primären Lenksystems Durchgriff auf die Bremsen des Fahrzeugs hat, derart, dass eine Drehung der Lenkachse in einer Bremswirkung an der kurveninneren Kette resultiert.

Erfindungsgemäß ist das Lenkventil über zwei Abschaltventile, die mit Federkraft geöffnet und elektrisch geschlossen werden, aktivierbar, wobei die Abschaltventile im geöffneten Zustand auf jeweils der Bremseinrichtung einer Seite des Fahrzeugs wirken. Bevorzugt ist das Lenksystem durch Unterbrechung der Versorgungsspannung der Abschaltventile elektrisch aktivierbar. Ferner sind die Abschaltventile mit zwei in Reihe geschalteten elektrischen Lenknotfunktionsschaltern mit mechanischer Haltefunktion elektrisch verbunden, wobei die Lenknotfunktionsschalter durch ein hohes Drehmoment in jeweils eine Richtung am Lenk-Händel aktivierbar sind, wodurch eine mechanische Aktivierung des Lenksystems ermöglicht wird.

Gemäß einer vorteilhaften Ausführungsform der Erfindung ist das regelbare Lenkventil über zwei erste Abschaltventile, die mit Federkraft geöffnet und elektrisch geschlossen werden und jeweils auf einen Bremskreislauf des Fahrzeugs wirken, aktivierbar, wobei zwei weitere jeweils in einem Bremskreislauf angeordnete Abschaltventile vorgesehen sind, die mit Federkraft geschlossen und elektrisch geöffnet werden, welche im geschlossenen Zustand den jeweiligen halben Bremskreislauf abschalten, so dass die Wirkung der ersten Abschaltventile im geöffneten Zustand auf jeweils der Bremseinrichtung einer Seite des Fahrzeugs ermöglicht wird.

Hierbei sind alle Abschaltventile mit zwei in Reihe geschalteten elektrischen Lenknotfunktionsschaltern mit mechanischer Haltefunktion elektrisch verbunden, welche durch ein hohes Drehmoment in jeweils eine Richtung am Lenk-Händel aktiviert werden können.

Der Ausfall des primären Lenksystems eines Kettenfahrzeugs kann durch folgende Fehler verursacht werden:
- Ausfall der Steuerelektronik oder der Bordnetzversorgung,
- Ausfall der elektrischen Antriebskomponenten, wie z.B. eines Elektromotors oder eines Antriebsumrichters, oder
- Ausfall der mechanischen Antriebskomponenten wie beispielsweise eines Getriebes.

Gemäß der Erfindung wird das erfindungsgemäße Lenksystem durch Unterbrechung der Spannung, die die vier beschriebenen Abschaltventile versorgt, aktiviert, wobei dies elektrisch oder mechanisch erfolgen kann.

Hierbei erfolgt die elektrische Aktivierung, wenn die Lenknotfunktionsschalter vom Steuergerät nicht mehr mit Spannung versorgt werden, weil das Steuergerät einen Ausfall im primären Lenksystem festgestellt hat, die Bordnetzversorgung ausgefallen ist oder das Steuergerät selbst ausgefallen ist, so dass die Spannungsversorgung der Lenknotfunktionsschalter unterbrochen ist.

Die mechanische Aktivierung des Lenksystems erfolgt über eine Drehung des Lenk-Händels mit hohem Drehmoment durch den Fahrer aufgrund fehlender Lenkwirkung, wodurch die Lenknotfunktionsschalter geöffnet werden und die Stromversorgung der Abschaltventile unterbrochen wird.

Die Erfindung wird im Folgenden anhand der beigefügten Figuren beispielhaft näher erläutert. Es zeigen:
- Figur 1: ein Prinzipbild einer bevorzugten Ausführungsform des erfindungsgemäßen Lenksystems;
- Figur 2: die hydraulische Kennlinie des regelbaren Lenkventils in Abhängigkeit der Stellung des Lenk-Händels und eine Veranschaulichung der Aktivierung der Lenknotfunktionsschalter gemäß der Erfindung; und
- Figur 3: eine schematische Darstellung des gemäß der Erfindung. vorgesehenen "Kampfschalters".

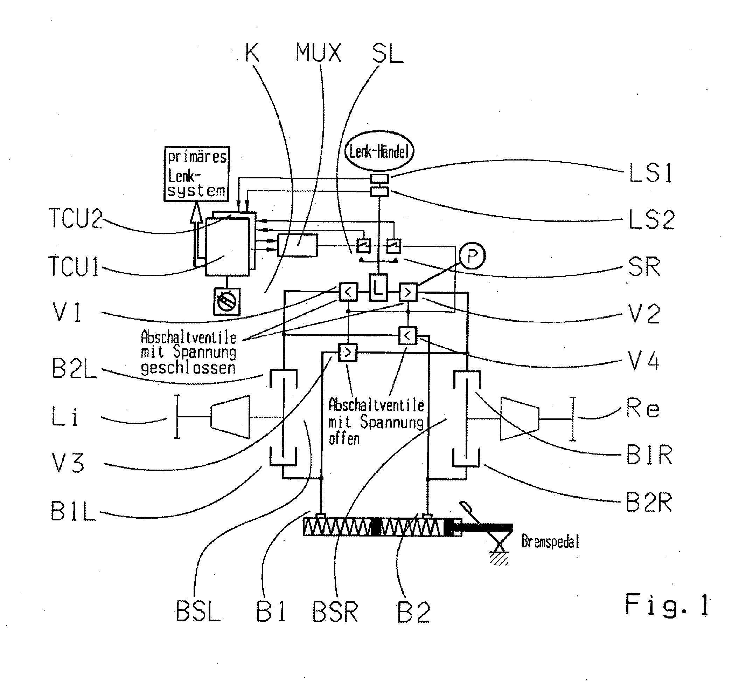

Bezugnehmend auf Figur 1 umfasst das erfindungsgemäße Lenksystem ein durch die Lenkachse regelbares Lenkventil L, welches bei Ausfall des primären Lenksystems Durchgriff auf die Bremsen des Fahrzeugs hat, derart, dass eine Drehung der Lenkachse in einer Bremswirkung an der kurveninneren Kette resultiert. Das Lenkventil L ist über zwei (mit dem Ventil L verbundene) Abschaltventile V1, V2, die mit Federkraft geöffnet und elektrisch geschlossen werden, aktivierbar, wobei die Ventile V1, V2 im geöffneten Zustand jeweils auf einen Bremskreislauf B1, B2 wirken.

Des weiteren sind zwei weitere jeweils in einem Bremskreislauf B1, B2 angeordnete Abschaltventile V3, V4 vorgesehen, die mit Federkraft geschlossen und elektrisch geöffnet werden, welche im geschlossenen Zustand den jeweiligen halben Bremskreislauf B1, B2 abschalten, so dass die Wirkung der Ventile V1, V2 im geöffneten Zustand auf jeweils der Bremseinrichtung einer Seite des Fahrzeugs B2L bzw. B1R ermöglicht wird.

Hierbei wird bei geschlossenen Ventilen V3, V4 die Verbindung der ersten Abschaltventile V1, V2 mit dem rechten bzw. linken Bremssattel B2R bzw. B1L unterbrochen, so dass die Ventile V1, V2 auf einen linken bzw. auf einen rechten Bremssattel B2L bzw. B1 R wirken.

Die Abschaltventile V1, V2, V3, V4 sind mit zwei in Reihe geschalteten elektrischen Lenknotfunktionsschaltern SL, SR mit mechanischer Haltefunktion elektrisch verbunden, wobei die Lenknottunktionsschalter durch ein hohes Drehmoment in jeweils eine Richtung am Lenk-Händel aktiviert werden können. Die Lenknotfunktionsschalter SL, SR sind mit dem Steuergerät des primären Lenksystems verbunden.

In Figur 1 ist mit BSL die linke Bremsscheibe und mit BSR die rechte Bremsscheibe bezeichnet. Ferner sind mit LS1 und LS2 die mit der Steuerung verbundenen Lenkwinkelsensoren bezeichnet; mit Mux ist ein zwischen der Steuerung und den Lenknotfunktionsschaltern SL, SR geschalteter Multiplexer bezeichnet.

Im Normalfall sind die Schalter SL und SR geschlossen. Durch die beiden Schalter werden die Ventile V1 und V2 mit Spannung vom Steuergerät geschlossen gehalten. Die Ventile V3 und V4, die in den normalen Bremskreisläufen B1, B2 angeordnet sind, sind im Gegensatz dazu offen gehalten. Das bedeutet, dass bei Betätigung des Bremspedals beide Bremskreise B1, B2 aktiv sind.

Wenn das Steuergerät TCU des primären Lenksystems die Schalter SL und SR mit Spannung nicht mehr versorgt (elektrische Aktivierung des Lenkventils), dann fällt die Spannung zur Versorgung der Ventile V1 bis V4 ab. Dadurch werden die Ventile V1 und V2 geöffnet und die Ventile V3 und V4 geschlossen. Somit hat das regelbare Lenkventil L am Lenk-Händel Durchgriff auf die Bremsen. Hierbei wirkt das Ventil V1 auf den linken Bremssattel B2L und das Ventil V2 auf den rechten Bremssattel B1R. Die Bremskreise B1 und B2 wirken nur noch jeweils auf Bremssattel B1L und B2R, da die Verbindung des Bremssattels B1 R und des Bremssattels B2L über V3 bzw. V4 unterbrochen ist. Die Bremswirkung beim Betätigen des Bremspedals wird sich dadurch halbieren. Durch das regelbare Lenkventil L ist es nun also möglich, die Bremsen abhängig vom Lenkausschlag variabel zu betätigen. (Mit P ist in der Figur der Druckbehälter für das Ventil L bezeichnet.) Dadurch ergibt sich eine unterschiedliche Bremswirkung links/rechts auf die Ketten und dementsprechend ergibt sich ein drehendes (gierendes) Moment auf das Fahrzeug, wodurch das Fahrzeug gelenkt werden kann.

Bei Ausfall der elektrischen oder mechanischen Antriebskomponenten des primären Lenksystems wird die fehlende Lenkwirkung vom Fahrer registriert. Hierbei wird angenommen, dass der Fahrer "automatisch" (intuitiv) eine höhere Kraft/höheres Lenkdrehmoment auf den Lenk-Händel ausübt.

Nach dem Überschreiten einer definierbaren Lenkdrehmomentschwelle nach links oder nach rechts werden die mit dem Lenk-Händel mechanisch gekoppelten Lenknotfunktionsschalter SL oder SR geöffnet. Durch eine Rückmeldung vom Notschalter SL oder SR wird dem Steuergerät TCU die Aktivierung des Notlenkmechanismus mitgeteilt; die Ventile V1 und V2 werden geöffnet und die Ventile V3 und V4 werden geschlossen, so dass das Fahrzeug über das Lenkventil L, wie oben beschrieben, lenkbar ist.

Für diese Funktion ist es nötig, dass die Lenknotfunktionsschalter SL und SR eine Selbsthaltefunktion beinhalten. Das bedeutet, dass sobald die Funktion einmal aktiviert ist, die Schalter SL oder SR aktiv bleiben. Das Zurücksetzen des redundanten Lenksystems kann nur im Stillstand des Fahrzeugs bei abgeschalteter Zündung erfolgen. Der Schalter SL oder SR muss hierbei manuell geschlossen werden:

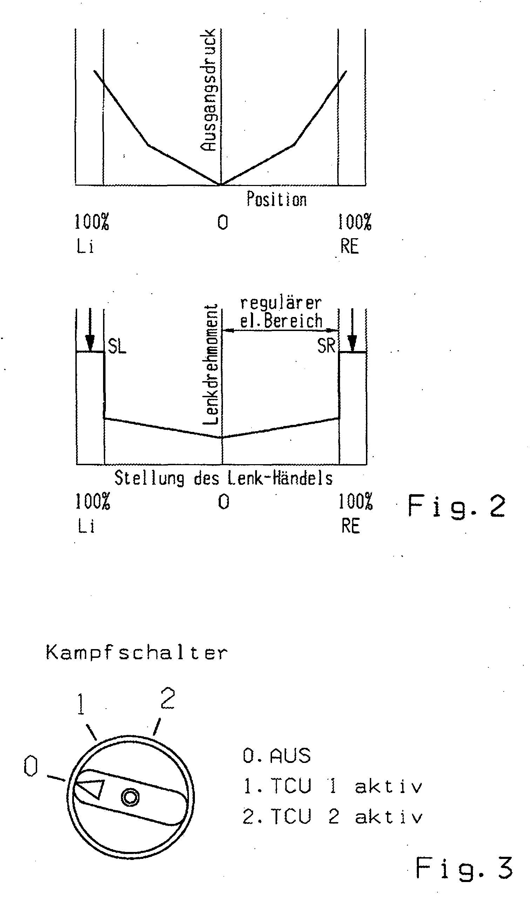

Im oberen Teil der Figur 2 ist beispielhaft eine Kennlinie des regelbaren Lenkventils L dargestellt. Wie aus der Figur ersichtlich, ist der erzielbare Ausgangsdruck bzw. die erzielbare Bremsleistung eine Funktion der Position der Lenkachse bzw. des Lenk-Händels. Der maximale Ausgangsdruck wird jeweils am Anschlag des Lenk-Händels erzielt.

Im unteren Teil der Figur, der das Lenkdrehmoment als Funktion der Stellung des Lenk-Händels darstellt, wird die Aktivierung der Lenknotfunktionsschalter SL oder SR veranschaulicht, welche nach dem Verlassen des regulären Bereichs und dem Überschreiten einer definierbaren Lenkdrehmomentschwelle nach links oder nach rechts erfolgt. Die Pfeile bezeichnen die Aktivierung des der jeweiligen Seite zugeordneten Lenknotfunktionsschalters.

Um eine ausreichende Sicherheit zu gewährleisten, muss das Steuergerät TCU Fehler im primären Lenksystem erkennen und als Folge eine Umschaltung von elektrischer Lenkfunktion zum erfindungsgemäßen mechanischhydraulischen Lenksystem bewirken. Deswegen muss das elektrische System grundsätzlich zweifach redundant ausgelegt werden, so dass Abweichungen erkannt werden können. Beim Ausfall beider Steuergeräte wird die mechanisch-hydraulische Lenkung ebenfalls aktiviert.

Um eine höhere Verfügbarkeit zu erzielen, ist im Rahmen einer vorteilhaften Weiterbildung der Erfindung ein Schalter K ("Kampfschalter") vorgesehen, welcher vom Fahrer betätigt werden kann. Durch die Betätigung des Schalters können alle Überwachungsfunktionen im Steuergerät TCU deaktiviert werden, im Sinne, dass in Kampfsituationen Komponentenschutz unwichtig ist.

In vorteilhafter Weise kann der Schalter mit mehreren Stellungen ausgeführt sein, so dass der Fahrer entscheiden kann, ob TCU 1 oder TCU 2 ausgefallen ist. Auf diese Weise ist es nicht nötig, eine dritte Schaltung einzubauen, um dies zu entscheiden, da der Fahrer besser entscheiden kann, ob er mit TCU 1 oder TCU 2 noch lenken kann.

Eine mögliche Schalterstellung des Kampfschalters ist Gegenstand der Figur 3. In Stellung 0 werden beide Steuerungen ausgeschaltet; die Stellung 1 entspricht der Aktivierung der TCU 1 und die Stellung 2 entspricht der Aktivierung der TCU 2. Beim Ausschalten aller Steuergeräte TCU1, TCU2 wird das Lenksystem, wie oben beschrieben aktiviert.

### Bezugszeichen

- L: Lenkventil
- LS1: Lenkwinkelsensor
- LS2: Lenkwinkelsensor
- V1: Abschaltventil
- V2: Abschaltventil
- V3: Abschaltventil
- V4: Abschaltventil
- SL: Lenknotfunktionsschalter
- SR: Lenknotfunktionsschalter
- B1: erster Bremskreislauf
- B2: zweiter Bremskreislauf
- B1R: Bremssattel
- B1L: Bremssattel
- B2R: Bremssattel
- B2L: Bremssattel
- BSL: Bremsscheibe
- BSR: Bremsscheibe
- Mux: Multiplexen
- P: Druckbehälter
- K: Kampfschalter
- TCU1: Steuergerät
- TCU2: Steuergerät

## Patentansprüche

1. Lenksystem für Kettenfahrzeuge, die zwei Bremskreisläufe umfassen, das nach dem Ausfall des primären Lenkmechanismus aktiviert wird, wobei das Lenksystem ein durch die Lenkachse regelbares Lenkventil (L) umfasst, welches bei Ausfall des primären Lenksystems Durchgriff auf die Bremsen des Fahrzeugs hat, derart, dass eine Drehung der Lenkachse in einer Bremswirkung an der kurveninneren Kette resultiert, **dadurch gekennzeichnet, dass** das Lenkventil (L) über zwei Abschaltventile (V1, V2), die mit Federkraft geöffnet und elektrisch geschlossen werden, aktivierbar ist, wobei die Ventile (V1, V2) im geöffneten Zustand auf jeweils der Bremseinrichtung einer Seite des Fahrzeugs wirken.

2. Lenksystem für Kettenfahrzeuge nach Anspruch 1, **dadurch gekennzeichnet, dass** es elektrisch durch Unterbrechung der Versorgungsspannung der Ventile (V1, V2) oder mechanisch aktivierbar ist, wobei die Ventile (V1, V2) mit zwei in Reihe geschalteten elektrischen Lenknotfunktionsschaltern (SL, SR) mit mechanischer Haltefunktion elektrisch verbunden sind, wobei die Lenknotfunktionsschalter (SL, SR) durch ein hohes Drehmoment in jeweils eine Richtung am Lenk-Händel aktivierbar sind, wodurch eine mechanische Aktivierung des Lenksystems ermöglicht wird.

3. Lenksystem für Kettenfahrzeuge nach Anspruch 1 oder 2, **dadurch gekennzeichnet, dass** das Lenkventil (L) über zwei Abschaltventile (V1, V2), die mit Federkraft geöffnet und elektrisch geschlossen werden, aktivierbar ist, wobei die Ventile (V1, V2) im geöffneten Zustand jeweils auf einen Bremskreislauf (B1, B2) wirken, und wobei zwei weitere jeweils in einem Bremskreislauf (B1, B2) angeordnete Abschaltventile (V3, V4) vorgesehen sind, die mit Federkraft geschlossen und elektrisch geöffnet werden, welche im geschlossenen Zustand den jeweiligen halben Bremskreislauf (B1, B2) abschalten, so dass die Wirkung der Ventile (V1, V2) im geöffneten Zustand auf jeweils der Bremseinrichtung einer Seite des Fahrzeugs (Bremssattel B2L bzw. Bremssattel B1 R) ermöglicht wird.

4. Lenksystem für Kettenfahrzeuge nach Anspruch 3, **dadurch gekennzeichnet, dass** bei geschlossenen Ventilen (V3, V4) die Verbindung der Ventile (V1) bzw. (V2) mit dem rechten bzw. linken Bremssattel (B2R) bzw. (B1L) unterbrochen ist.

5. Lenksystem für Kettenfahrzeuge nach Anspruch 3 oder 4, **dadurch gekennzeichnet, dass** die Abschaltventile (V1, V2, V3, V4) mit zwei in Reihe geschalteten und mit dem Steuergerät des primären Lenksystems (TCU) verbundenen elektrischen Lenknotfunktionsschaltern (SL, SR) mit mechanischer Haltefunktion elektrisch verbunden sind, wobei die Lenknotfunktionsschalter (SL, SR) durch ein hohes Drehmoment in jeweils eine Richtung am Lenk-Händel aktivierbar sind.

6. Lenksystem für Kettenfahrzeuge nach Anspruch 5, **dadurch gekennzeichnet, dass** es durch die Unterbrechung der Versorgungsspannung der Lenknotfunktionsschalter (SL, SR) seitens des Steuergerätes des primären Lenksystems (TCU) und somit der Ventile (V1, V2, V3, V4) aktivierbar ist, wobei die Ventile (V1) und (V2) geöffnet und die Ventile (V3) und (V4) geschlossen werden, so dass das regelbare Lenkventil (L) über die Ventile (V1) und (V2) Durchgriff auf die Bremsen des Fahrzeugs hat, wobei das Ventil (V1) auf den linken Bremssattel (B2L) und das Ventil (V2) auf den rechten Bremssattel (B1R) wirkt.

7. Lenksystem für Kettenfahrzeuge nach Anspruch 5, **dadurch gekennzeichnet, dass** es nach dem Überschreiten einer definierbaren Lenkdrehmomentschwelle am Lenk-Händel nach links oder nach rechts mechanisch aktivierbar ist, wobei in diesem Fall die mit dem Lenk-Händel mechanisch gekoppelten Lenknotfunktionsschalter (SL) oder (SR) geöffnet werden und eine Unterbrechung der Versorgungsspannung der Ventile (V1, V2, V3, V4) bewirken, wobei die Ventile (V1) und (V2) geöffnet und die Ventile (V3) und (V4) geschlossen werden, so dass das regelbare Lenkventil (L) über die Ventile (V1) und (V2) Durchgriff auf die Bremsen des Fahrzeugs hat, wobei das Ventil (V1) auf den linken Bremssattel (B2L) und das Ventil (V2) auf den rechten Bremssattel (B1R) wirkt.

8. Lenksystem für Kettenfahrzeuge nach einem der vorangehenden Ansprüche, **dadurch gekennzeichnet, dass** das elektrische System des primären Lenkmechanismus des Fahrzeugs zweifach redundant ausgelegt ist bzw. zwei Steuergeräte (TCU1, TCU2) umfasst, so dass die Erkennung von Abweichungen und die damit verbundene Aktivierung des Lenksystems ermöglicht wird.

9. Lenksystem für Kettenfahrzeuge nach Anspruch 8, **dadurch gekennzeichnet, dass** es einen vom Fahrer bedienbaren Schalter (K) umfasst, mittels dessen die Steuergeräte (TCU1, TCU2) des primären Lenkmechanismus des Fahrzeugs ausgeschaltet oder wahlweise aktiviert werden können, wobei beim Ausschalten aller Steuergeräte (TCU1, TCU2), das Lenksystem aktiviert wird.

## Claims

1. Steering system for tracked vehicles that comprise two brake circuits, which steering system is activated after the primary steering mechanism fails, wherein the steering system comprises a steering valve (L) that can be controlled by means of the steering axle, which steering valve in the event of the primary steering system failing has control of the brakes of the vehicle in such a manner that a rotation of the steering axle results in a braking effect on the curve-inner track, **characterized in that** the steering valve (L) can be activated by way of two shut-off valves (V1, V2) that are opened by means of a resilient force and electrically closed, wherein the valves (V1, V2) in the open state act on the respective brake device on one side of the vehicle.

2. Steering system for tracked vehicles according to Claim 1, **characterized in that** it can be activated electrically by interrupting the supply voltage of the valves (V1, V2) or mechanically, wherein the valves (V1, V2) are electrically connected to two electrical emergency steering function switches (SL, SR) that have a mechanical retaining function and are connected in series, wherein the emergency steering function switches (SL, SR) can be activated in a respective direction at the steering handle by means of a high torque, whereby it is rendered possible to mechanically activate the steering system.

3. Steering system for tracked vehicles according to Claim 1 or 2, **characterized in that** the steering valve (L) can be activated by way of two shut-off valves (V1, V2) that are opened by means of a resilient force and electrically closed, wherein the valves (V1, V2) in the open state act on a respective brake circuit (B1, B2) and wherein two further shut-off valves (V3, V4) that are arranged in each case in a brake circuit (B1, B2) are provided, which shut-off valves are closed by means of a resilient force and electrically opened and in the closed state switch off the respective half brake circuit (B1, B2), so that it is rendered possible for the valves (V1, V2) in the open state to act on the respective brake device on one side of the vehicle (brake caliper B2L and/or brake caliper B1R).

4. Steering system for tracked vehicles according to Claim 3, **characterized in that** in the case of closed valves (V3, V4) the connection of the valves (V1) and/or (V2) to the right-hand and/or left-hand brake caliper (B2R) and/or (B1L) is interrupted.

5. Steering system for tracked vehicles according to Claim 3 or 4, **characterized in that** the shut-off valves (V1, V2, V3, V4) are electrically connected to two emergency steering function switches (SL, SR) that have a mechanical retaining function, are connected in series and are connected to the control device of the primary steering system (TCU), wherein the emergency steering function switches (SL, SR) can be activated in a respective direction at the steering handle by means of a high torque.

6. Steering system for tracked vehicles according to Claim 5, **characterized in that** it can be activated by means of interrupting the supply voltage of the emergency steering function switches (SL, SR) on the part of the control device of the primary steering system (TCU) and consequently of the valves (V1, V2, V3, V4), wherein the valves (V1) and (V2) are open and the valves (V3) and (V4) are closed, so that the controllable steering valve (L) has control over the brakes of the vehicle by way of the valves (V1) and (V2), wherein the valve (V1) acts on the left-hand brake caliper (B2L) and the valve (V2) acts on the right-hand brake caliper (B1R).

7. Steering system for tracked vehicles according to Claim 5, **characterized in that** it can be mechanically activated at the steering handle towards the left or towards the right after a definable steering torque threshold has been exceeded, wherein in this case the emergency steering function switches (SL) or (SR) that are mechanically coupled to the steering handle are opened and cause an interruption in the supply voltage of the valves (V1, V2, V3, V4), wherein the valves (V1) and (V2) are open and the valves (V3) and (V4) are closed, so that the controllable steering valve (L) has control over the brakes of the vehicle by way of the valves (V1) and (V2), wherein the valve (V1) acts on the left-hand brake caliper (B2L) and the valve (V2) acts on the right-hand brake caliper (B1R).

8. Steering system for tracked vehicles according to any one of the preceding claims, **characterized in that** the electrical system of the primary steering mechanism of the vehicle is designed in a duplicate redundant manner and/or comprises two control devices (TCU1, TCU2), so that it is rendered possible to recognize any faults and to perform the associated activation of the steering system.

9. Steering system for tracked vehicles according to Claim 8, **characterized in that** it comprises a switch (K) that can be operated by the driver, by means of which switch the control devices (TCU1, TCU2) of the primary steering mechanism of the vehicle can be switched off or selectively activated, wherein the steering system is activated when all the control devices (TCU1, TCU2) are switched off.

## Revendications

1. Système de direction pour véhicules à chenilles comprenant deux circuits de freinage, ledit système étant activé après la défaillance du mécanisme de direction principal, le système de direction comprenant une soupape de direction (L) pouvant être réglée par le biais de la barre de direction et agissant en cas de défaillance du système de direction sur les freins du véhicule, de telle sorte qu'une rotation de la barre de direction provoque un effet de freinage au niveau de la chenille se trouvant à l'intérieur du virage, **caractérisé en ce que** la soupape de direction (L) peut être activée par le biais de deux soupapes de déconnexion (V1, V2) ouvertes par le biais d'une force de ressort et fermées électriquement, les soupapes (V1, V2) agissant respectivement à l'état ouvert sur le dispositif de freinage d'un côté du véhicule.

2. Système de direction pour véhicules à chenilles selon la revendication 1, **caractérisé en ce qu'**il peut être activé électriquement par interruption de la tension d'alimentation des soupapes (V1, V2) ou bien mécaniquement, les soupapes (V1, V2) étant reliées sur le plan électrique à deux contacteurs de fonctionnement de secours de direction (SL, SR) électriques branchés en série avec une fonction d'arrêt mécanique, les contacteurs de fonctionnement de secours de direction (SL, SR) pouvant être activés par un couple de rotation élevé dans respectivement une direction au niveau du levier manuel de direction, permettant ainsi une activation mécanique du système de direction.

3. Système de direction pour véhicules à chenilles selon la revendication 1 ou 2, **caractérisé en ce que** la soupape de direction (L) peut être activée par le biais de deux soupapes de déconnexion (V1, V2) ouvertes par le biais d'une force de ressort et fermées électriquement, les soupapes (V1, V2) agissant respectivement à l'état ouvert sur un circuit de freinage (B1, B2) et deux soupapes de déconnexion (V3, V4) supplémentaires respectivement disposées dans un circuit de freinage (B1, B2) étant prévues, lesdites soupapes étant fermées par le biais d'une force de ressort et ouvertes électriquement et déconnectant à l'état fermé la moitié respective de circuit de freinage (B1, B2), de sorte que l'effet des soupapes (V1, V2) à l'état ouvert sur le dispositif de freinage est possible respectivement sur un côté du véhicule (étrier de frein B2L et/ou étrier de frein B1R).

4. Système de direction pour véhicules à chenilles selon la revendication 3, **caractérisé en ce que** lorsque les soupapes (V3, V4) sont fermées, la liaison des soupapes (V1) et/ou (V2) avec l'étrier de frein droit et/ou gauche (B2R) et/ou (B1L) est interrompue.

5. Système de direction pour véhicules à chenilles selon la revendication 3 ou 4, **caractérisé en ce que** les soupapes de déconnexion (V1, V2, V3, V4) sont reliées sur le plan électrique à deux contacteurs de fonctionnement de secours de direction (SL, SR) électriques connectés en série reliés à l'appareil de commande du système de direction principal (TCU) avec une fonction d'arrêt mécanique, les contacteurs de fonctionnement de secours de direction (SL, SR) pouvant être activés par un couple de rotation élevé dans respectivement une direction au niveau du levier manuel de direction.

6. Système de direction pour véhicules à chenilles selon la revendication 5, **caractérisé en ce qu'**il peut être activé par interruption de la tension d'alimentation des contacteurs de fonctionnement de secours de direction (SL, SR) du côté de l'appareil de commande du système de direction principal (TCU) et ainsi des soupapes (V1, V2, V3, V4), les soupapes (V1) et (V2) étant ouvertes et les soupapes (V3) et (V4) étant fermées, de sorte que la soupape de direction (L) réglable agit par le biais des soupapes (V1) et (V2) sur les freins du véhicule, la soupape (V1) agissant sur l'étrier de frein gauche (B2L) et la soupape (V2) agissant sur l'étrier de frein droit (B1R).

7. Système de direction pour véhicules à chenilles selon la revendication 5, **caractérisé en ce qu'**il peut être activé de façon mécanique vers la gauche ou vers la droite après dépassement d'un seuil de couple de rotation de direction définissable au niveau du levier manuel de direction, les contacteurs de fonctionnement de secours de direction (SL) ou (SR) couplés sur le plan mécanique au levier manuel de direction étant ouverts dans ce cas et provoquant une interruption de la tension d'alimentation des soupapes (V1, V2, V3, V4), les soupapes (V1) et (V2) étant ouvertes et les soupapes (V3) et (V4) étant fermées, de sorte que la soupape de direction (L) réglable peut agir par le biais des soupapes (V1) et (V2) sur les freins du véhicule, la soupape (V1) agissant sur l'étrier de frein gauche (B2L) et la soupape (V2) agissant sur l'étrier de frein droit (B1R).

8. Système de direction pour véhicules à chenilles selon l'une quelconque des revendications précédentes, **caractérisé en ce que** le système électrique du mécanisme de direction principal du véhicule est réalisé de façon à être redondant en double et/ou comprend deux appareils de commande (TCU1, TCU2), de façon à permettre la détection des écarts et l'activation du système de direction associée.

9. Système de direction pour véhicules à chenilles selon la revendication 8, **caractérisé en ce qu'**il comprend un contacteur (K) pouvant être commandé par le conducteur et à l'aide duquel les appareils de commande (TCU1, TCU2) du mécanisme de direction principal du véhicule peuvent être déconnectés ou activés au choix, le système de direction étant activé lorsque tous les appareils de commande (TCU1, TCU2) sont déconnectés.
